# EUROPEAN PATENT APPLICATION

(11) **EP 4 253 021 A1**
(43) Date of publication of application: **04.10.2023**
(21) Application number: 23163735.6
(22) Date of filing: 23.03.2023
(51) Int. Cl.: B29D 30/06, B29C 33/10

(54) **FORCED INSERTION DEVICE FOR OBJECTS IN GENERAL TO BE INSERTED IN A PREDIFINED SEAT**

(30) Priority: 30.03.2022 IT 202200006221
(71) Applicant: Cavalieri, Federico, 40057 Granarolo Dell'Emilia BO (IT)
(72) Inventor: Cavalieri, Federico, 40057 Granarolo Dell'Emilia BO (IT)
(74) Representative: Modiano, Micaela Nadia

(57) **Abstract**

A forced insertion device for work units to be inserted in a predefined seat, the device comprises a casing (2) which supports at least one linear actuator (4), provided with a movable element (5) which can translate along a main axis (B) and is configured to generate an impulsive force along the main axis (B), and at least one loading assembly (7), provided with means (8) for retaining a unit (A), wherein the assembly (7) comprises at least:

- a carriage (9), which is coupled to the casing and comprises internally a main channel (10) which comprises a unit (A),

- a percussion element (11), which is at least partially accommodated slidingly within the main channel (10) and faces one end of the movable element (5), to transmit the impulsive force generated by the actuator to the unit (A), retained by the means (8) inside the main channel (10) on the opposite side with respect to the actuator.

## Description

The present invention relates to a forced insertion device.

In the field of extrusion, in order to allow air pockets to escape from the molds during the forming of vehicle tires, and to avoid deformations and defects on their surface, the practice of providing a plurality of holes along the molds is known. It is also known that said holes, after allowing the air to escape, are filled by polymeric material under pressure, forming corresponding appendages or protrusions that extend from the outer surfaces of the molded product.

Said appendages must then be removed one by one if they are not to result in an undesirable aesthetic effect and/or, even worse, limit or eliminate the functionalities of the finished product. This activity is performed manually or by means of special machines, but in any case it entails long times and non-negligible costs (it should be considered that several hundred holes can be provided in a single mold); moreover, it causes the risk of generating other defects on the surfaces involved. Moreover, sometimes residues of polymeric material remain in the hole at the end of the molding step, accumulating over time to the point of obstructing it.

To overcome the problems highlighted above, the use of valve assemblies to be inserted in the holes is also known: each of said assemblies comprises a kind of cylindrical sleeve (vent pin housing) which is stably accommodated in the hole and a pin (vent pin), which is retained elastically so as to close the channel inside the sleeve. The pin allows the air to escape while preventing the polymeric material from entering the hole, thus hindering the forming of the unwanted appendages. Patent application No. US2021/012930A1 shows an example of these valve assemblies, providing further indications on the application context.

However, even this embodiment is not free from drawbacks.

Insertion of the sleeves is performed manually by an operator, provided with a hammer and a punch: this is obviously a laborious operation that requires time and care and therefore has a significant impact on the cost of the final product.

The aim of the present invention is to solve the problems described above, providing a device that ensures practical methods for the insertion of cylindrical sleeves in the holes of a mold.

Within the scope of this aim, an object of the invention is to provide a device and/or apparatus that allow to rapidly insert cylindrical sleeves in the holes of a mold without imposing efforts on the operator.

Another object of the invention is to provide a method that allows to rapidly insert cylindrical sleeves in the holes of a mold without imposing efforts on the operator.

Another object of the invention is to provide a device and/or an apparatus that allow to repeat the insertion cycle without interruptions.

Another object of the invention is to provide a device and/or an apparatus that ensure high reliability in operation.

Another object of the invention is to provide a device that adopts a technical and structural architecture that is alternative to those of devices of the known type.

Not least object of the invention is to provide a device that can be obtained easily starting from commonly commercially available elements and materials.

Yet another object of the invention is to provide a device that has low costs and is of assured application.

This aim and these and other objects that will become better apparent hereinafter are achieved by a device according to claim 1, an apparatus according to claim 9 and a method according to claim 10.

Further characteristics and advantages of the invention will become better apparent from the description of a preferred but not exclusive embodiment of the device, the apparatus, and the method according to the invention, illustrated by way of non-limiting example in the accompanying drawings, wherein:

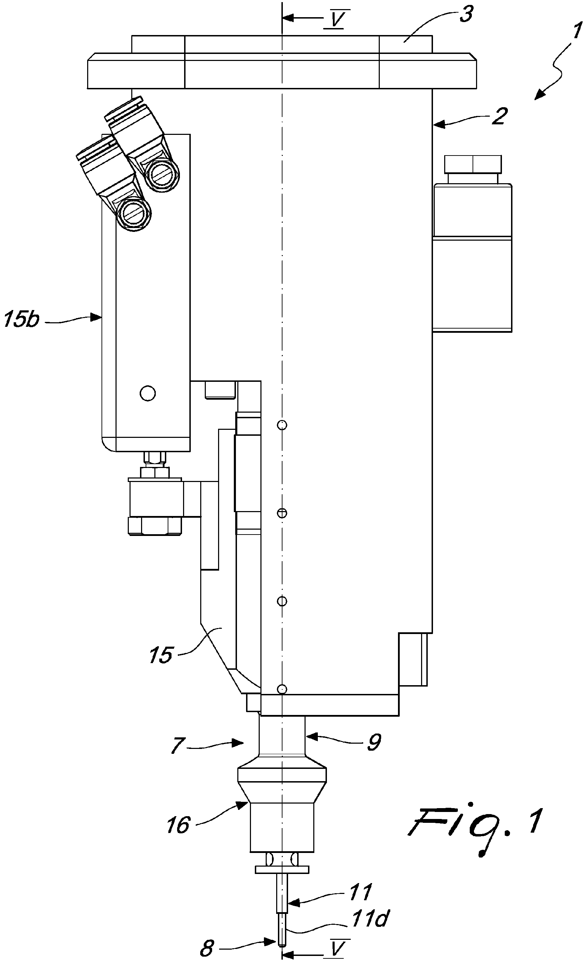

Figure 1 is a front elevation view of the device according to the invention;

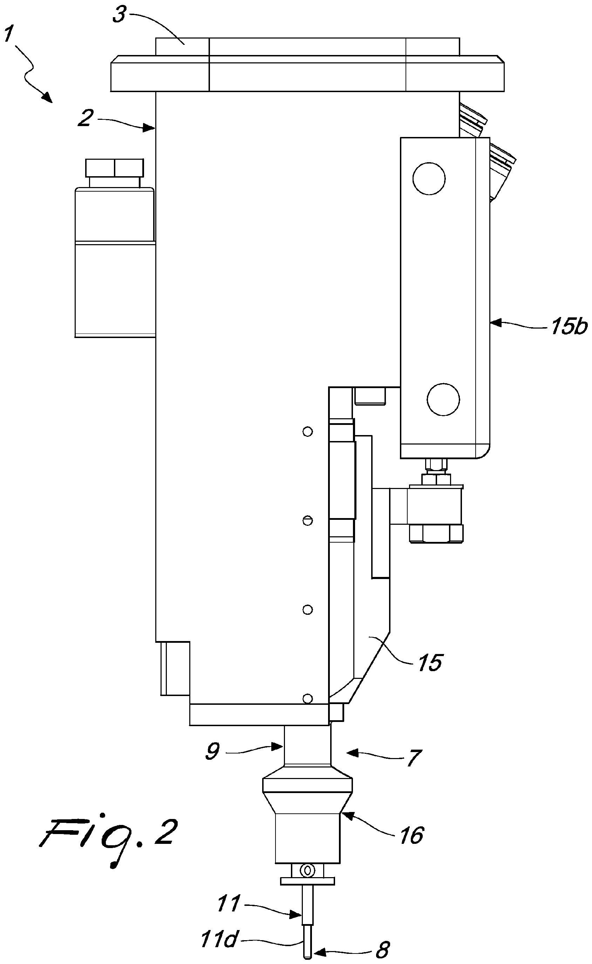

Figure 2 is a rear view of the device of Figure 1;

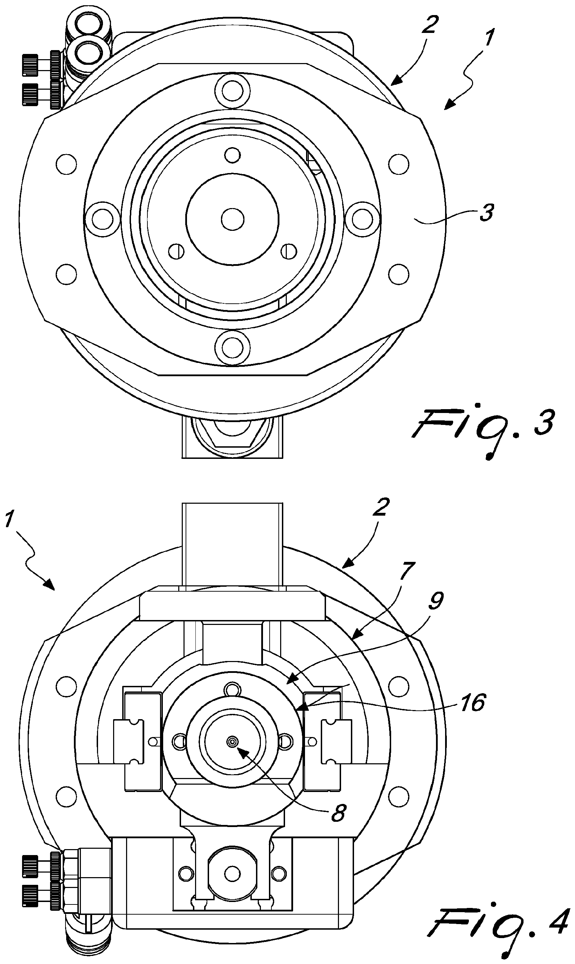

Figures 3 and 4 are a top view and a bottom view, respectively, of the device of Figure 1;
Figure 5 is a sectional view of Figure 1, taken along the plane V-V;
Figures 6 to 9 are sequential sectional views of the operation of the device, taken along a longitudinal plane;

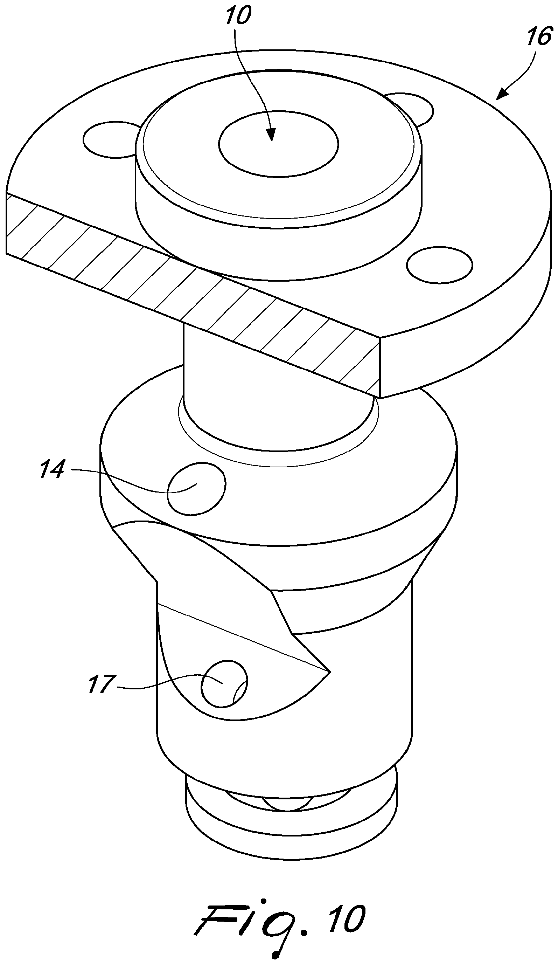

Figure 10 is an axonometric and partially sectional view of a detail of the device of Figure 1;

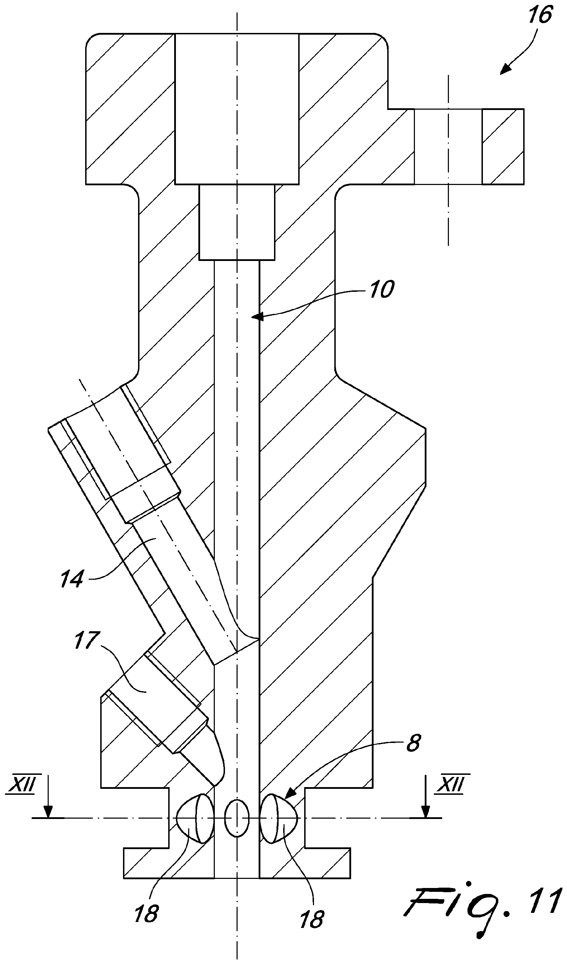

Figure 11 is a sectional view of Figure 10, taken along a longitudinal plane;
Figure 12 is a sectional view of Figure 11, taken along the plane XII-XII;
Figure 13 is a block diagram view of the method according to the invention.

With reference to the figures, the reference numeral 1 generally designates a forced insertion device for work units A, such as sleeves, bushes, pins, objects in general to be inserted in a predefined seat (of any type).

In this respect, it should be noted right now that the device 1 has a preferred (but not exclusive) application in the field of rubber extrusion, particularly for the provision of vehicle tires. More particularly, in the particular ways that will be shown hereinafter, the device 1 can be used effectively to forcibly insert units A constituted (as in the accompanying figures) by cylindrical sleeves (known as vent pin housings) inside the holes normally provided in the metal molds used indeed for the production of tires. Once insertion has occurred, a pin (vent pin) is stably accommodated in the sleeve and retained elastically so as to close the channel inside the sleeve (and therefore the hole) in order to allow the passage of air and hinder instead the seepage of the polymeric material. The use of valve systems comprising the vent pin and the respective vent pin housing is in any case well known (according to practice, they are manually installed in the holes by an operator, equipped with a hammer and a punch) and therefore these systems will not be dwelt upon further.

It should be stressed, however, that the use of the device 1 just described constitutes only one preferred but not exclusive application of the invention; without abandoning the protective scope claimed herein, the device 1 can be used just as effectively in other contexts, for the forced insertion of units A even of another type in holes or seats of interest of another kind, provided in other types of objects made of metal (or other material) which are preferably but not necessarily elongated along an axis of longitudinal symmetry.

According to the invention, the device 1 comprises first of all a casing 2; the casing 2 can be provided for example with an optionally interchangeable flange 3 (or other coupling component), for connection to a robotic arm or to another precision movement system, according to any number of reference axes. In the present context, the casing 2 acts in practice as a frame or fixed reference, with respect to which the movements of the other components described hereinafter are defined. The casing 2 typically comprises a box-like body, preferably having a cylindrical shape (as in the accompanying figures), and other fixed components, such as for example the electrical or electronic components necessary for correct operation, can be connected thereto.

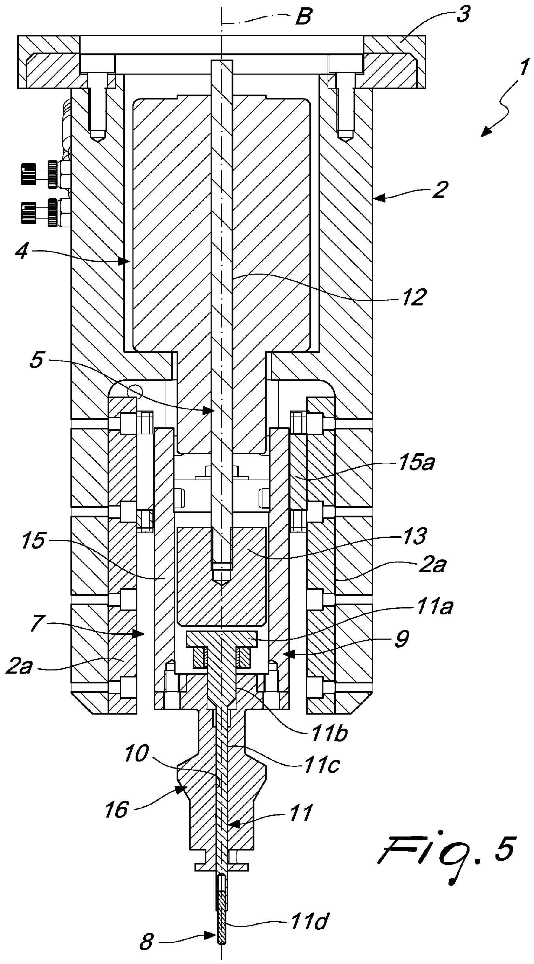

The casing 2 supports at least one linear actuator 4, which is provided with a movable element 5 which in turn can translate, with respect to the casing 2, along a main forced insertion axis B. As shown by the accompanying Figures 5-9, typically the actuator 4 is accommodated inside the casing 2.

The actuator 4 is configured (in per se known manners) to generate an impulsive force that is directed indeed along the main axis B.

In particular, in the preferred application (and in the accompanying figures) the actuator 4 is of the electromagnetic type, but it is not excluded to resort to different practical choices. For example, in fact, the actuator 4 might be of the pneumatic or brushless type (or others).

Furthermore, according to the invention, the device 1 comprises a (substantially automatic) loading assembly 7, provided with means 8 for retaining a unit A. The retention means 8 keep the unit A coupled to the device 1, particularly during the activation of the actuator 4 and the translation of the movable element 5.

The assembly 7 comprises at least one carriage 9, which is coupled to the casing 2 with the possibility of relative translation (i.e., with respect to the casing 2) parallel to the main axis B and internally comprises a main channel 10, which in turn is arranged along the main axis B and is configured for the coaxial accommodation of the unit A. The dimensions of the main channel 10 (particularly, the breadth of the passage port) are therefore chosen as a function of the format of the unit A that one wishes to process and so that after the unit A has been inserted in the main channel 10 the former can move in the latter only parallel to itself and to the main axis B.

Moreover, according to the invention, the assembly 7 comprises at least one percussion element 11, which is at least partially accommodated slidingly within the main channel 10 and faces one end of the movable element 5, so as to be able to transmit the impulsive force generated by the actuator 4 to the unit A, while it is retained by the means 8 inside the main channel 10 on the opposite side with respect to the actuator 4.

The aim of the invention is thus achieved: the device 1 allows to load and retain a unit A inside the main channel 10, where the percussion element 11 can slide and transmits to the unit A the impulsive force generated by the actuator 4, which is indeed necessary to provide the forced insertion A in the seat of interest, in a simple and automatic manner, without requiring the direct intervention of the operator.

In particular, the movable element 5 comprises a stem 12 which is (coaxially) arranged along the main axis B, substantially inside the casing 2, and a terminal block 13 (a weight) which is integrally coupled to an end portion of the stem 12: the block 13 is configured for impact with the element 11 following the translation of the movable element 5 in order to transmit the impulsive force as desired (to the percussion element 11 and to the unit A).

Conveniently, the carriage 9 comprises at least one auxiliary loading channel 14, which is placed in communication (for example by means of a pneumatic coupling) with the main channel 10 with a first end and, on the opposite side, is open outward along a side of said carriage 9.

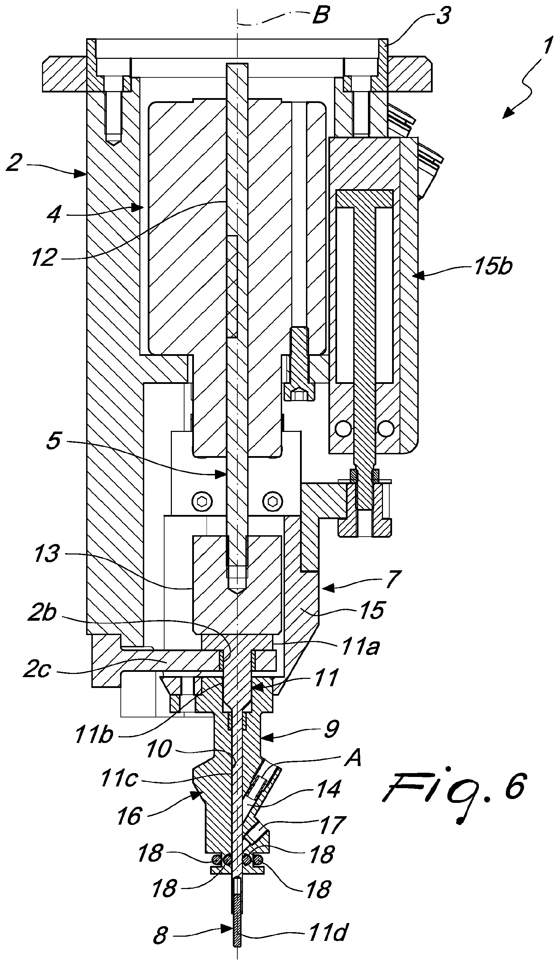

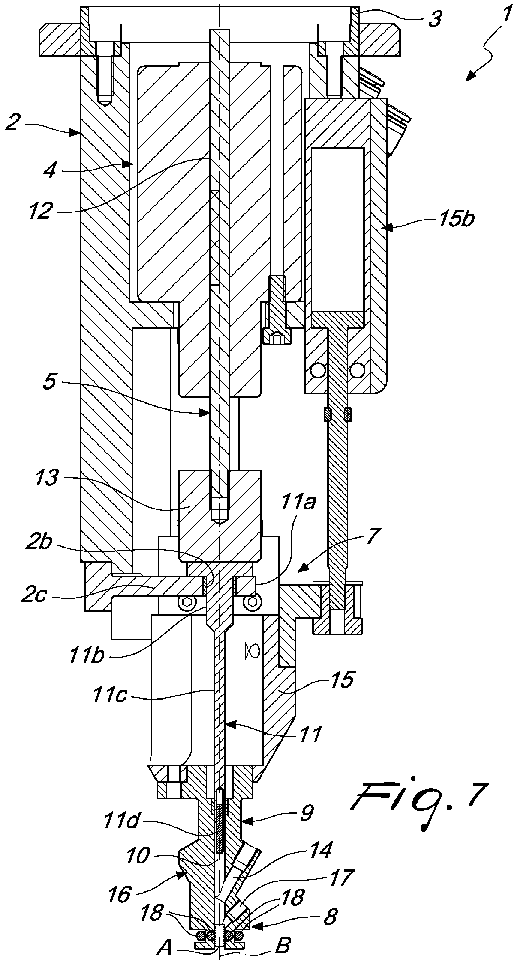

In this embodiment, the element 11 can slide within the main channel 10 at least between a first arrangement, in which it closes the first end and access to the auxiliary channel 14 (Figure 6, for example), and a second arrangement, in which it is kept spaced from the first end (Figure 7) to allow the insertion of a unit A in the main channel 10, indeed through the auxiliary channel 14. As will be better explained hereinafter, the transition between the two arrangements occurs preferably by keeping the percussion element 11 stationary (because it is retained by the casing 2) and by moving the carriage 9 with respect to it instead.

The auxiliary channel 14 can be used for the loading of the unit A, which is then received in the main channel 10 only when the percussion element 11 moves from the first arrangement to the second one. Therefore, the remarks already made for the dimensions of the main channel 10 apply for the dimensions of the auxiliary channel 14. In this respect, the possibility to associate the auxiliary channel 14 with an automatic feeding and loading system, chosen in any case also of a known type and as such not described in detail in the present description, is provided.

In the preferred embodiment, shown in the accompany figures by way of non-limiting example of the invention, the carriage 9 comprises a slider 15, which is slidingly coupled to the casing 2 and rigidly supports a contoured tab 16 on the opposite side with respect to the actuator 4. It is indeed the tab 16 that forms internally at least the main channel 10 (and, if provided, the auxiliary channel 14).

Typically, the slider 15 has a substantially cylindrical shape and is hollow inside in order to accommodate inside it the percussion element 11, ensuring that it can in any case translate (with respect to said slider and to the casing 2) between the first arrangement and the second arrangement. As already noted, the possibility to keep the element 11 stationary and move the slider 15 with respect to it in order to obtain the transition between the two arrangements is provided; vice versa, by keeping the slider 15 stationary the percussion element 11 can translate inside it during the transmission of the impulsive force.

The relative sliding between the slider 15 and the casing 2 is for example made possible by prismatic guides 2a fixed to the casing 2, on which ball-bearing sliding blocks 15a can slide which are indeed fixed to the slider 15 (Figure 5): the guides 2a indeed define, for the slider 15, a direction of translation which is parallel to the main axis B. The slider 15 can be translated by a pneumatic piston 15b (or by another component assigned to movement), supported by the casing 2 and coupled to the slider 15 for example by means of a base plate.

It should also be noted that the carriage 9 and the tab 16 in particular can comprise an additional secondary channel 17, also in practice in communication with the main channel 10, for the placement of an optical fiber sensor (or of another type) configured to detect the presence of the unit A.

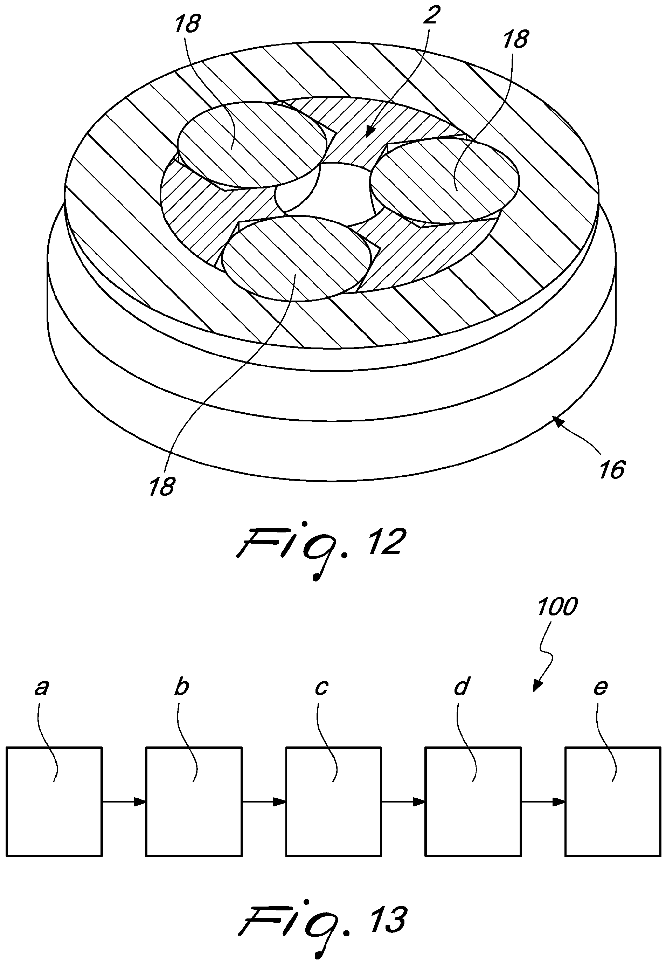

Advantageously, the retention means 8 comprise a plurality of locking balls 18 (Figures 7 and 12, for example) which are arranged in respective recesses provided inside the carriage 9 (of the tab 16) at the same longitudinal height (the one defined by the main axis B) and facing the main channel 10. In other words, and as can be seen clearly from the accompanying figures, the locking balls 18 are arranged along an ideal circumference which is perpendicular and coaxial to the main axis B. For example, as in the accompanying figures, it is possible to resort to three locking balls 18 arranged in as many recesses which are equidistant (at 120° to each other).

The locking balls 18 protrude into the main channel 10, in order to retain by interference the unit A introduced indeed in the main channel 10. The retention condition introduced here can be seen in Figure 7: the percussion element 11 is in the second arrangement, and the unit A has thus been able to move along the auxiliary channel 14 until it has entered the main channel 10, stopping its stroke indeed when it reaches the longitudinal height where the locking balls 18, which hold it in place, are located.

It should be noted, moreover, that preferably the secondary channel 17 is arranged so as to allow the sensor to detect the presence of the unit A indeed at the locking balls 18 (for this purpose, the secondary channel 17 faces the locking balls 18 and/or the recesses that accommodate them).

In the preferred embodiment, shown in the accompanying figures by way of non-limiting example of the application of the invention, the percussion element 11 comprises in sequence (in series, along the main axis B): a flattened head 11a, a first rod 11b and a second rod 11c (said components being preferably axially symmetrical and coaxial).

The flattened head 11a is configured for contact with the movable element 5 (and with the terminal block 13 in particular). For this purpose, therefore, as can be seen from the figures, the head 11a has a transverse cross-section that is similar or corresponds to that of the terminal block 13, indeed to ensure the best contact area for the transfer of the impulsive force generated by the actuator 4.

The first rod 11b extends coaxially from the head 11a (along the main axis B), with a smaller transverse cross-section than said head; the first rod 11b is slidingly retained in a hole 2b of corresponding dimensions which is provided along a supporting plate 2c formed by the casing 2. In other words, the hole 2b is chosen of such dimensions as to allow the movement of the first rod 11b but not the movement of the head 11a: when the percussion element 11 translates outward (in order to exit from the space occupation of the casing 2), it finds a stroke limiter when indeed the head 11a, unable to pass through the hole 2b, stops against the plate 2c. In the stroke in the opposite direction, instead, evidently the stroke stops when the percussion element 11 rests with the head 11a against the block 13 of the movable element 5.

The second rod 11c extends coaxially from the first rod 11b (along the main axis B) with a transverse cross-section that is smaller than that of the first rod 11b and can slide inside the main channel 10. In the preferred embodiment, it is indeed with the second rod 11c that the percussion element 11, in the first arrangement, closes the auxiliary channel 14.

Usefully, the retention means 8 can also comprise a terminal needle 11d, which extends (integrally) coaxially from the second rod 11c (along the main channel 10). For example, the needle 11d can be partially inserted, in a coaxial manner, in a duct which is internal to the terminal part of the second rod 11c.

The needle 11d is configured to receive and magnetically retain a unit A (by virtue of a magnet which is internal to the needle 11d), obviously if it has a tubular shape (as in the preferred embodiment already introduced, and in the accompanying figures). A unit A having a tubular shape can in fact be fitted over the needle 11d following the insertion (of said unit A) in the main channel 10 and the translation of the percussion element 11.

Other means 8, in any case associated with the element 11, can be provided if the unit A has a different shape.

The subject matter of the present description and of the protection claimed therewith is, therefore, first of all the device 1 described so far; likewise, the subject matter of the present description is also a forced insertion apparatus, for work units A, of the type of sleeves, bushings, pins, objects in general, to be inserted in a predefined seat.

According to the invention, the apparatus comprises a device 1 of the type described so far and also a movement system, of the type of a robot and the like, which supports the device 1 and is configured for automatic alignment of the percussion element 11, and of the unit A retained by the assembly 7 by virtue of means 8, with the predefined insertion seat.

In practice, protection is claimed first of all on a specific tool (the device 1) designed for forced insertion, regardless of the ways in which it is moved in space; at the same time, the subject matter of the protection claimed herein is also an integrated solution (the apparatus just described) which not only provides the specific tool but is also capable of moving it and bringing it to the desired position for forced insertion.

A subject matter of the protection claimed herein is also a method 100 for the forced insertion of work units A, of the type of sleeves, bushings, pins, objects in general, to be inserted in a predefined seat. The method 100 can be performed by the device 1 (or the apparatus) described on the previous pages.

The method 100 consists first of all, in a step a., in arranging the loading assembly 7 in a first configuration, of minimum distance between the carriage 9 and the casing 2, and in which the percussion element 11 occupies substantially the entire main channel 10. This is, in other words, the condition shown in Figure 6, in which the percussion element 11 is in the first arrangement, which has already been described.

Subsequently, in a step b., the method 100 consists in translating the carriage 9 so as to move it away from the casing 2, while keeping the percussion element 11 stationary (it has already been seen that this result can be achieved by virtue of the plate 2c that retains the head 11a). This allows to free at least a portion of the main channel 10 (and to bring the percussion element 11 to the second arrangement, as in Figure 7).

The method 100 then provides, in a step c., for introducing a unit A in the portion of the main channel 10 previously cleared; as already seen, introduction may occur through the auxiliary channel 14, in which case, either by gravity or by means of an appropriate push, the unit A moves from the auxiliary channel 14 toward the main channel 10; as an alternative, one may consider introducing the unit A directly in the main channel 10, on the opposite side with respect to the movable element 5.

If the unit A is introduced first in the auxiliary channel 14, this can be done before or after the execution of step b. (before or after bringing the percussion element 11 to the second arrangement).

In any case, preferably the unit A translates in the main channel 10 until it is introduced between the locking balls 18, which retain it (Figure 7).

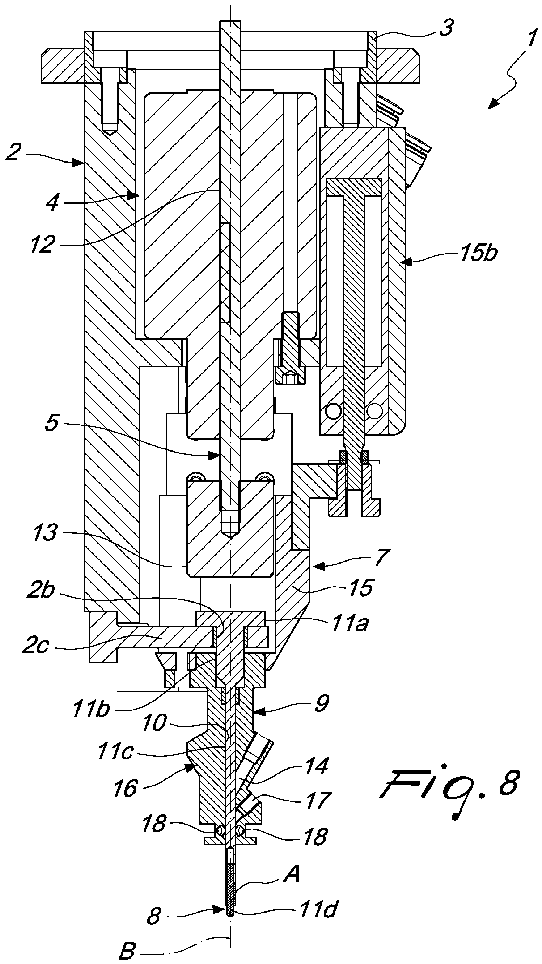

Subsequently, in a step d., the method 100 provides for returning the carriage 9 to the minimum distance configuration, keeping the unit A coupled to the carriage 9, inside the main channel 10, by virtue of the means 8. This brings the device 1 to the condition of Figure 8.

During the movement of the carriage 9 toward the minimum-distance configuration, initially the unit A moves integrally with the carriage 9, because it is retained by the locking balls 18; then (if it has a tubular shape) the unit A fits over the needle 11d of the percussion element 11 (which in the meantime is always stationary) or in any case can remain integral with said percussion element with a coupling for example of a magnetic type or by virtue of means 8 of another kind.

Then the method 100 provides, in a step e., for actuating the linear actuator 4 in order to generate the impulsive force along the main axis B and transmit the force to the unit A by means of the percussion element 11. This indeed allows to achieve the desired forced insertion.

Obviously, at least before step e., the element 11 will have been aligned with the predefined insertion seat.

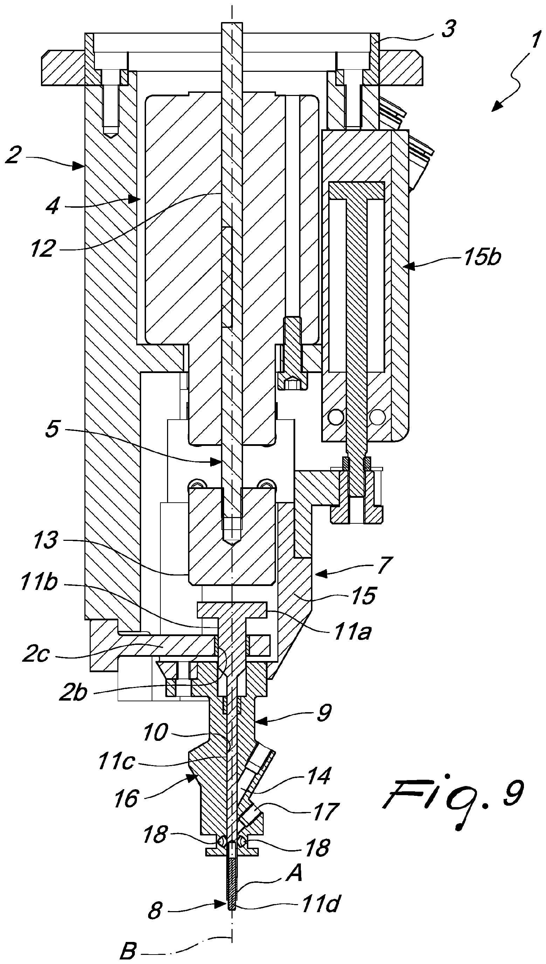

It should be noted that preferably, before the actuation of step e. and after step d., provisions are also made to insert the unit A partially in the destination hole/seat and/or to press the percussion element 11 against the destination seat, taking care to slightly retract the movable element 5. In this manner, the percussion element 11 can translate toward the inside of the casing 2, in order to gain the space necessary for the forced insertion stroke, which is indeed controlled by the movable element 5. One thus obtains the condition of Figure 9, which is directly preliminary to the actuation of the actuator 4 which is aimed at generating the impulsive force directed along the main axis B, for forced insertion.

The operation of the device (and the apparatus) according to the invention has actually already been described in the preceding pages, but a brief summary is presented hereinafter.

The device 1 allows to insert a unit A, constituted by a sleeve of the vent pin housing type, forcibly and automatically in the vent holes of new and/or existing molds by virtue of the action of the actuator 4 and of its movable element 5 which presses against the percussion element 11. As mentioned, such use is in any case only one preferred application of the invention, certainly not the only one (other units A may be inserted in to the same manner in other seats of interest).

By virtue of a robotic arm or other precision handling system, the device 1 is first of all placed proximate to the hole to be processed of a mold or a section thereof (or proximate to any other seat of interest).

To provide the insertion, first of all the piston 15b is actuated, which causes the carriage 9 to translate (exit), freeing space in the main channel 10 in order to allow the vent pin housing (or other unit A), preferably kept waiting in the auxiliary channel 14, to descend and position itself in said main channel 10 in contact with the locking balls 18.

The carriage 9 is then made to translate in the opposite direction (it is retracted), until the percussion element 11 pushes the unit A past the locking balls 18, retaining it in position at the needle 11d (by virtue of an internal magnet), or in another manner.

Then the unit A is rested and partially inserted in the destination hole in the mold (or other seat of interest) so that the percussion element 11 is slightly retracted and gains the stroke necessary for forced insertion: in fact, after pre-inserting the unit A in the seat (the vent pin housing in the mold, for example), the actuator 4 is activated and the element 11 is moved in line with the direction of the hole (along the main axis B), forcing the insertion of the unit A, until it reaches (preferably) the position where it is positioned flush with the surface of the mold.

Once insertion is complete, it is possible to restore the cycle start conditions, and by means of the automatic feeding and loading system it is possible to place another unit A in the auxiliary channel 14, positioning the percussion element 11 in front of another hole, in order to repeat the cycle automatically.

Therefore, the device 1, the apparatus and the method 100 allow to insert cylindrical sleeves, vent pin housings or other units A in the holes of a mold or in another seat of interest in a practical, quick and fully automatic manner, without imposing any effort on the operator.

Moreover, by relieving the operator of the task of personally hammering the vent pin housing (or other unit A), the risk of injury or chronic illness is eliminated.

The automatic operation that the device 1 or the apparatus according to the invention are assigned can be repeated easily, without interruptions, for any number of units A to be inserted in respective seats of interest, therefore allowing, for example, to place in a short time the several hundred vent pin housings in the respective holes normally provided in the molds provided for the forming of vehicle tires.

The invention thus conceived is susceptible of numerous modifications and variations, all of which are within the scope of the accompanying claims; all the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

The disclosures in Italian Patent Application No. 102022000006221, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A forced insertion device for work units (A), such as sleeves, bushings, pins, objects in general, to be inserted in a predefined seat, **characterized in that** it comprises a casing (2) which supports at least one linear actuator (4), provided with a movable element (5) which can translate, with respect to said casing (2), along a main forced insertion axis (B) and is configured to generate an impulsive force that is directed along said main axis (B), and at least one loading assembly (7), provided with means (8) for retaining a unit (A) and comprising at least:
- a carriage (9), which is coupled to said casing (2) with the possibility of relative translation parallel to said main axis (B) and comprises internally a main channel (10), which is arranged along said main axis (B) and is configured for the coaxial accommodation of a unit (A),
- a percussion element (11), which is at least partially accommodated slidingly within said main channel (10) and faces one end of said movable element (5), to transmit the impulsive force generated by said actuator (4) to the unit (A), retained by said means (8) inside said main channel (10) on the opposite side with respect to said actuator (4).

2. The device according to claim 1, **characterized in that** said actuator (4) is an electromagnetic actuator (4).

3. The device according to claim 1 or 2, **characterized in that** said movable element (5) comprises a stem (12) which is arranged along said main axis (B) substantially inside said casing (2) and a terminal block (13) which is integrally coupled to an end portion of said stem (12), configured for impact with said percussion element (11) following the translation of said movable element (5) for the transmission of the impulsive force.

4. The device according to one or more of the preceding claims, **characterized in that** said carriage (9) comprises at least one auxiliary loading channel (14), which is placed in communication with said main channel (10) with a first end and, on the opposite side, is open outward along a side of said carriage (9), said percussion element (11) being able to slide within said main channel (10) at least between a first arrangement, in which it closes said first end and the access to said auxiliary channel (14), and a second arrangement, in which it is kept spaced from said first end to allow the insertion of a unit (A) in said main channel (10), through said auxiliary channel (14).

5. The device according to one or more of the preceding claims, **characterized in that** said carriage (9) comprises a slider (15), which is slidingly coupled to said casing (2) and rigidly supports a contoured tab (16) on the opposite side with respect to said actuator (4) said tab (16) forming internally at least said main channel (10).

6. The device according to one or more of the preceding claims, **characterized in that** said retention means (8) comprise a plurality of locking balls (18) arranged in respective recesses provided inside said carriage (9) at the same longitudinal height and facing said main channel (10), said locking balls (18) protruding into said main channel (10), for the retention by interference of the unit (A) introduced in said main channel (10).

7. The device according to one or more of the preceding claims, **characterized in that** said percussion element (11) comprises in sequence:
- a flattened head (11a), configured for contact with said movable element (5),
- a first rod (11b), which extends coaxially from said head (11a) with a smaller transverse cross-section than said head (11a), said first rod (11b) being retained slidingly in a hole (2b) of corresponding size provided along a supporting plate (2c) formed by said casing (2),
- a second rod (11c), which extends coaxially from said first rod (11b) with a smaller transverse cross-section than said first rod (11b), said second rod (11c) being able to slide within said main channel (10).

8. The device according to claim 7, **characterized in that** said retention means (8) comprise a terminal needle (11d), which extends coaxially from said second rod (11c) and is configured to receive and magnetically retain a tubular unit (A) which can be fitted over said needle (11d) following the insertion in said main channel (10) and the translation of said percussion element (11).

9. A forced insertion apparatus, for work units (A), such as sleeves, bushings, pins, objects in general, to be inserted in a predefined seat, **characterized in that** it comprises a device (1) according to one or more of the preceding claims and a movement system, such as a robot and the like, which supports said device (1), for the automatic alignment of said percussion element (11), and of the unit (A) retained by said assembly (7) by virtue of said means (8), with the predefined insertion seat.

10. A method for the forced insertion of work units (A), such as sleeves, bushings, pins, objects in general, to be inserted in a predefined seat, which can be performed by a device (1) according to one or more of the preceding claims, which consists in:
a. arranging said loading assembly (7) in a first configuration of minimum distance between said carriage (9) and said casing (2) and wherein said percussion element (11) substantially completely occupies said main channel (10),
b. translating said carriage (9), moving it away from said casing (2), keeping said percussion element (11) stationary, in order to free at least one portion of said main channel (10),
c. introducing a unit (A) in said portion of the main channel (10),
d. returning said carriage (9) to said minimum distance configuration, keeping the unit (A) coupled to said carriage (9), within said main channel (10), by virtue of said means (8),
e. actuating said linear actuator (4), to generate the impulsive force along said main axis (B) and transmit the force to the unit (A) by means of said percussion element (11).
